Europäisches Patentamt

European Patent Office

Office européen des brevets

(19)

(11) EP 0 866 587 A1

(12) DEMANDE DE BREVET EUROPEEN

(43) Date de publication:
23.09.1998 Bulletin 1998/39

(51) Int Cl.6: H04L 25/06

(21) Numéro de dépôt: 98400582.7

(22) Date de dépôt: 12.03.1998

(84) Etats contractants désignés:
AT BE CH DE DK ES FI FR GB GR IE IT LI LU MC NL PT SE
Etats d'extension désignés:
AL LT LV MK RO SI

(30) Priorité: 13.03.1997 FR 9702992

(71) Demandeur: ALCATEL ALSTHOM COMPAGNIE GENERALE D'ELECTRICITE
75008 Paris (FR)

(72) Inventeurs:
• Vogel, Hélène
  38240 Meylan (FR)
• Galligo, Michel
  75003 Paris (FR)

(74) Mandataire: El Manouni, Josiane et al
COMPAGNIE FINANCIERE ALCATEL
Dépt. Propr. Industrielle
30, avene Kléber
75116 Paris (FR)

(54) Dispositif de suppression des sauts parasites de composante continue pour récepteur radio de type fréquence intermédiaire zéro et procédé de suppression correspondant

(57) Dispositif de suppression des sauts parasites de composante continue affectant la réception d'un signal à fréquence radio émis par éléments de signaux dits "bursts", notamment pour récepteur de type fréquence intermédiaire zéro, et procédé de suppression correspondant.

Le dispositif comporte des moyens (10) de normalisation en puissance des bursts successifs par rapport à la puissance du signal utile obtenu, des moyens (8) pour déterminer des caractéristiques de valeur et de position du saut de composante continue pour chaque burst reçu, chaque saut étant supposé au moins approximativement positionné dans le temps par rapport au burst qu'il dégrade, comme le sera le saut suivant par rapport au burst suivant, des moyens correcteurs (9) pour soustraire les caractéristiques de saut déterminées pour chaque burst du signal en bande de base après normalisation.

L'invention s'applique aux terminaux radiomobiles des réseaux radio cellulaires numériques.

FIG.1

EP 0 866 587 A1

## Description

L'invention concerne un dispositif de suppression destiné à protéger les récepteurs radio et en particulier ceux du type fréquence intermédiaire zéro contre les sauts parasites de composante continue susceptibles d'affecter les signaux reçus, ainsi que les appareils comportant ce dispositif.

Elle s'applique plus particulièrement aux récepteurs exploités dans les réseaux radio cellulaires numériques dont les réceptions sont susceptibles d'être perturbées par les sauts de composante continue occasionnés par un brouilleur bursté. Elle concerne aussi le procédé de suppression mis en oeuvre.

Il est possible de simplifier les récepteurs radio et en particulier ceux qui équipent les terminaux de radiocommunication des réseaux de radiotéléphonie mobile, en n'utilisant plus de fréquence intermédiaire dans les récepteurs et en passant directement du signal à fréquence radio reçu à un signal en bande de base. Ceci permet donc d'éliminer les éléments de ces récepteurs qu'impliquait l'utilisation de cette fréquence intermédiaire.

Une solution pour éviter l'emploi d'une fréquence intermédiaire est évoquée dans le préambule du document EP-A-0474615, elle consiste à récupérer le signal utile contenu dans un signal reçu dont la porteuse est un signal de type $f = A \cos \omega t + \varphi$ en exploitant les résultats d'une multiplication de ce signal reçu par un signal local en cos $\omega t$ et ceux d'une multiplication de ce signal reçu par un signal local en sin $\omega t$, $\omega$ ayant même valeur pour le signal reçu et pour les deux signaux locaux.

Les résultats de ces deux multiplications correspondent respectivement à un élément de signal en phase I et à un élément de signal en quadrature Q comprenant chacun des composantes voisines de la fréquence zéro qui sont obtenues par différence et des composantes voisines du double de la fréquence de la porteuse du signal reçu qui sont obtenues par sommation. Un filtrage passe-bas permet de ne conserver que les composantes, dites à fréquence zéro, des éléments de signaux I et Q qui ont été obtenues par différence et qui sont exploitées pour obtenir la partie utile du signal reçu.

Un des problèmes qui se pose avec les récepteurs appliquant cette technique est que des émissions parasites sont susceptibles de créer des sauts de composante continue en bande de base qui viennent dégrader le signal utile obtenu en sortie d'un récepteur, ce signal utile pouvant alors être reçu avec un niveau de puissance beaucoup plus faible que celui de la composante continue qui le parasite.

Tel peut-être le cas dans les réseaux radio cellulaires numériques de type GSM, lorsqu'un bruiteur vient perturber un terminal en réception en ajoutant un saut ou "offset" de composante continue au signal utile que ce terminal doit recevoir, en particulier si ce bruiteur est "bursté" c'est-à-dire s'il émet sur une porteuse qu'il partage temporellement, comme cela est classique dans les réseaux radiomobiles à accès multiples partagés en temps. Dans ce cas, le saut de composante continue ne perturbe pas nécessairement la totalité du signal reçu et il agit différemment sur les composantes en phase I et en quadrature Q de ce signal reçu.

Une démodulation correcte de ce dernier implique donc la prise en compte de ce problème et en particulier une détermination des caractéristiques des sauts parasites affectant chacune des composantes du signal reçu de manière à permettre une correction de ces dernières avant exploitation.

L'invention propose donc un dispositif destiné à assurer une suppression des sauts parasites de composante continue affectant la réception d'un signal à fréquence radio émis temporellement multiplexé sous forme d'une succession d'éléments de signaux, dits "bursts", constitués chacun d'un même nombre "m" d'échantillons.

Selon une caractéristique de l'invention, il comporte des moyens de normalisation en puissance des bursts successivement reçus par rapport à la puissance du signal utile obtenu, des moyens pour déterminer la valeur instantanée de la composante continue pour des segments de burst comportant un même nombre entier de m/n échantillons du même burst et des valeurs moyennes par segment qui sont obtenues par cumul à partir de bursts successifs, des moyens pour déterminer des caractéristiques de valeur et de position du saut de composante continue pour chaque burst reçu, par calcul à partir des valeurs moyennes et instantanées par segments, chaque saut étant supposé au moins approximativement positionné dans le temps par rapport au burst qu'il dégrade, comme le sera le saut suivant par rapport au burst suivant, des moyens correcteurs pour soustraire les caractéristiques de saut déterminées pour chaque burst du signal en bande de base obtenu après normalisation.

Selon une caractéristique de l'invention, le dispositif comporte des moyens pour déterminer la valeur instantanée de composante continue pour les composantes en phase I et en quadrature Q à zéro fréquence d'un signal radio reçu et des moyens pour déterminer une valeur cumulée moyenne par segment de composante, d'une part en phase d'autre part en quadrature pour un burst reçu, par sommation de la valeur instantanée obtenue pour ce segment, pondérée par un facteur de prise en compte de mesure, et de la valeur cumulée obtenue pour le burst précédemment reçu pour le même signal, pondérée par un facteur d'oubli dont la somme avec le facteur de prise en compte de mesure est égale à un.

Selon une caractéristique de l'invention, le dispositif comporte des moyens pour déterminer une position de saut de composante continue précise à un bit près pour chaque burst reçu à partir des valeurs de composante continue avant et après une transition occasionnée par un saut de composante continue, dans une des composantes en phase ou en quadrature d'un burst, qui ont été déterminées pour le segment auquel correspond l'erreur minimale pour ce burst et d'une valeur intermédiaire correspondant au saut de composante continue déterminé pour les "n" bits du segment à erreur minimal.

Selon une caractéristique de l'invention, le dispositif comporte des moyens pour moyens correcteurs prenant en compte la différence entre les valeurs de composante continue "dch" et "dcb" d'une part et "dcqh" et "dcqb" d'autre part qui sont déterminées pour un burst pour la suppression des composantes continues de saut parasite qui affectent les composantes en phase et en quadrature de ce burst, à partir de la position de saut, au bit près, déterminée pour ce burst.

L'invention propose aussi un récepteur radio, de type fréquence intermédiaire zéro, fournissant deux composantes en bande de base, l'une en phase I et l'autre en quadrature Q, à partir d'un signal à fréquence radio reçu et plus particulièrement destiné à recevoir un signal émis temporellement multiplexé sous forme d'une succession d'éléments de signaux, dits "bursts", constitués chacun d'un même nombre "m" d'échantillons.

Selon une caractéristique de l'invention, ce récepteur comporte un dispositif de suppression des sauts parasites de composante continue, tel que défini ci-dessus qui est au moins partiellement contenu dans un processeur de traitement numérique de signal et en aval d'un étage convertisseur radio fournissant les composantes en phase I et en quadrature Q d'un signal en bande de base à partir d'un signal à fréquence radio reçu par le récepteur.

L'invention propose encore un procédé de suppression des sauts parasites de composante continue affectant la réception d'un signal à fréquence radio émis temporellement multiplexé sous forme d'une succession d'éléments de signaux, dits "bursts", constitués chacun d'un même nombre "m" d'échantillons.

Selon une caractéristique de l'invention ce procédé comporte:

- au moins une étape de normalisation en puissance des bursts successivement reçus par rapport à la puissance du signal utile obtenu,
  une étape de détermination de la valeur instantanée de la composante continue pour des segments de burst comportant un même nombre entier de m/n échantillons du même burst et des valeurs moyennes par segment qui sont obtenues par cumul à partir de bursts successifs,
- une étape de détermination des caractéristiques de valeur et de position du saut de composante continue pour chaque burst reçu, par calcul à partir des valeurs moyennes et instantanées par segments, chaque saut étant supposé au moins approximativement positionné dans le temps par rapport au burst qu'il dégrade, comme le sera le saut suivant par rapport au burst suivant,
- une étape de correction de signal par soustraction des caractéristiques de saut déterminées pour chaque burst du signal en bande de base obtenu après normalisation.

L'invention, ses caractéristiques et ses avantages sont précisés dans la description qui suit en liaison avec les figures évoquées ci-dessous.

La figure 1 présente un schéma de principe relatif à un dispositif permettant la mise en oeuvre du procédé selon l'invention dans un récepteur de type fréquence intermédiaire zéro.

La figure 2 présente un diagramme montrant un exemple de distribution des valeurs instantanées de composantes continues "dci_inst" pour les "m/n" segments d'un burst.

Les figures 3 et 4 présentent des diagrammes de distribution des estimations des valeurs de composante continue "tds_dci" obtenues pour les "m/n" segments d'un burst après prise en compte d'une pluralité "z1" ou "z2" de bursts successifs d'un même signal.

Les figures 5 et 6 présentent des exemples de distribution des erreurs aux moindres carrés déterminées obtenues pour les "m/n" segments d'un burst après prise en compte de "z1" ou "z2" éléments successifs d'un même signal.

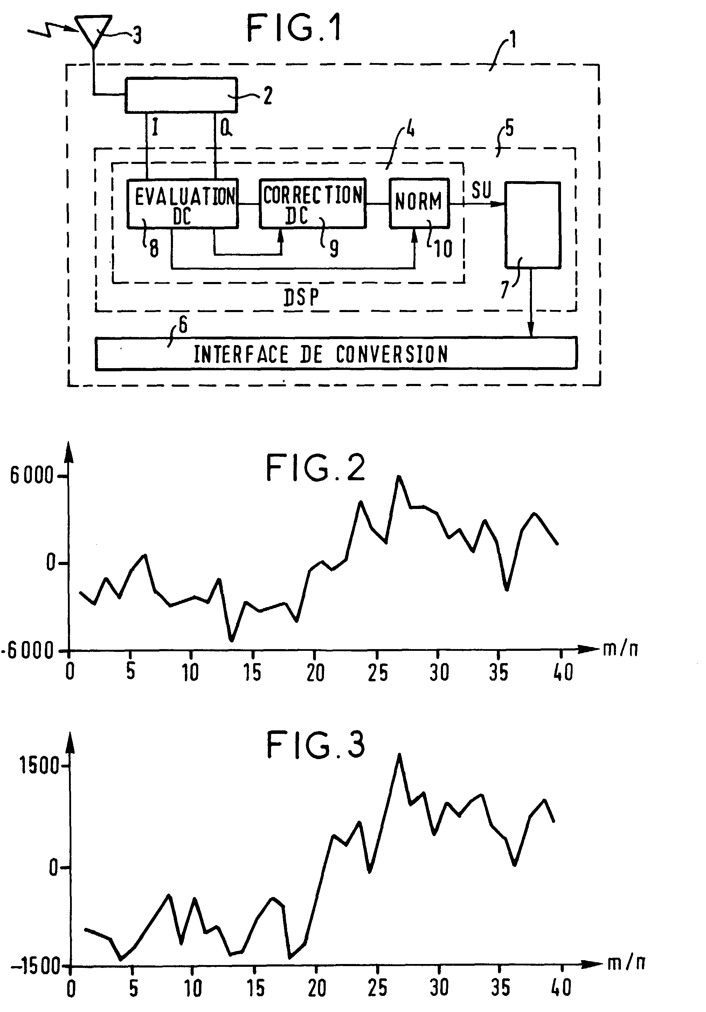

Le récepteur 1 schématisé sur la figure 1 est supposé être du type fréquence intermédiaire zéro, il est par exemple inclus dans un appareil émetteur-récepteur non représenté, tel que par exemple un terminal radiomobile d'un réseau radio cellulaire numérique de type GSM. Ce récepteur 1 est supposé doté d'un étage convertisseur 2 qui reçoit les signaux radio captés par une antenne 3 et qui en extrait les deux composantes à zéro fréquence I et Q d'un signal de base, telles qu'évoquées ci -dessus.

Ces composantes sont fournies à un dispositif d'élimination de saut de composante continue 4, selon l'invention. Ce dispositif est par exemple contenu dans un processeur de traitement numérique de signal 5 chargé de traiter les composantes en phase et quadrature du signal de base de manière à en extraire les informations utiles. Il peut alternativement être positionné au moins en partie en amont d'un tel processeur de traitement numérique de signal.

Cette extraction s'effectue au profit d'une interface 6 permettant de mettre ces informations sous formes appropriée avant transmission soit à des organes de traitement d'information soit à des organes transducteurs, ces organes, non représentés, étant intégrés ou raccordés au récepteur.

A cet effet, le processeur de traitement numérique de signal 5 comporte au moins un dispositif 7 permettant de traiter un signal utile SU fourni par le dispositif d'élimination 4 selon l'invention à partir des composantes I et Q de signal de base qu'il a reçues de l'étage convertisseur 2 du récepteur en vue de leur transmission à l'interface 6.

Ce dispositif 7 est constitué à l'aide d'éléments matériels et/ou logiciels comme le dispositif d'élimination 4. Il n'est pas décrit plus avant, de même que l'interface de conversion 6 dans la mesure où l'un et l'autre n'ont qu'un rapport indirect avec l'objet de la présente invention.

Le dispositif d'élimination 4 comporte un ensemble de moyens 8 chargés de la détermination des caractéristiques du saut parasite affectant les composantes I et Q d'un signal utile reçu et de la puissance dudit signal reçu. Il comporte aussi un ensemble de moyens correcteurs de saut 9 qui sont asservis aux moyens de détermination de caractéristiques de saut. Il comporte encore un ensemble de moyens de normalisation de puissance 10 qui sont notamment commandés par les moyens de détermination de puissance et qui agissent sur les composantes I et Q du signal reçu qui leur sont transmises par les moyens correcteurs de saut 9 après évaluation par les moyens de détermination 8.

Les moyens 8 prennent en compte les composantes en phase I et en quadrature Q produites par l'étage convertisseur 2 à partir des bursts ou éléments de signaux qui lui sont successivement transmis par voie hertzienne pour la détermination des caractéristiques des sauts parasites affectant un signal radio reçu.

Une de ces caractéristiques que le dispositif selon l'invention vise à détermine la position "pos" de chaque saut par rapport au burst où il intervient.

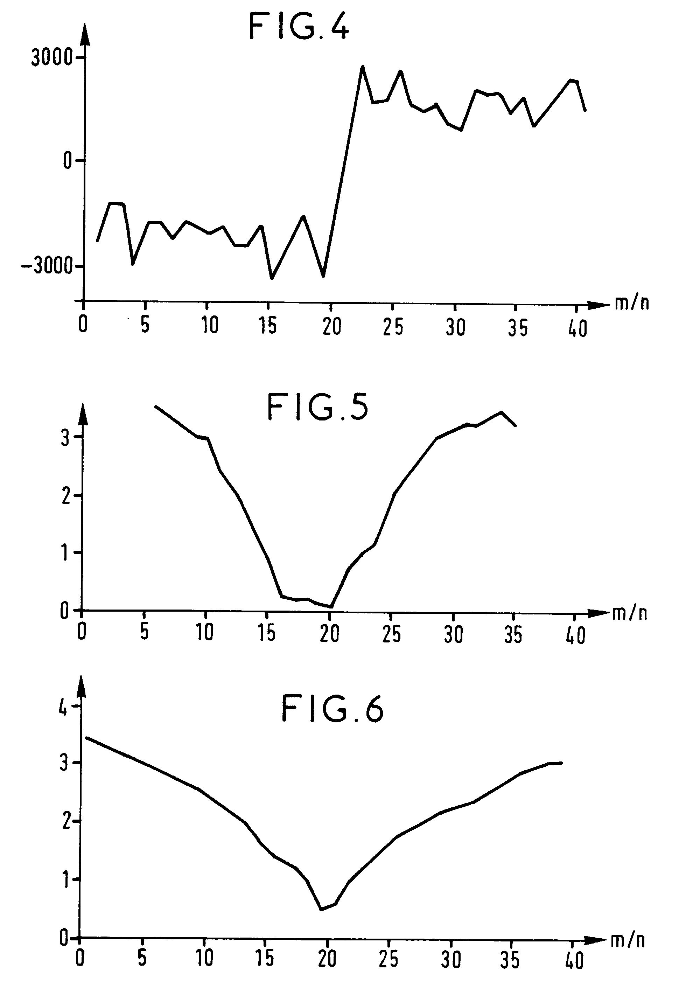

Deux autres caractéristiques également déterminées sont les deux valeurs résiduelles en tension continue respectivement obtenues pour la composante en phase I et pour la composante en quadrature de phase Q du signal reçu, l'une depuis le début d'un burst jusqu'à un saut et l'autre de ce saut jusqu'en fin de du burst, soit ,graphiquement, l'une à gauche et l'autre à droite du saut. La figure 4 présente un exemple de représentation d'un burst au cours duquel transparaît un saut de tension parasite, tel qu'occasionné par un brouilleur bursté.

L'estimation des valeurs de composante continue pour un burst reçu est réalisée en sommant "n" par "n", les "m" échantillons successifs de ce burst, le nombre n étant par exemple choisi égal à 4 dans le cas de bursts composés chacun de m = 156 échantillons, la valeur présentée en ordonnée étant ici arbitraire. Chaque burst est donc représenté par "m/n" valeurs de composante continue "dci" déterminées chacune pour un des segments successifs de "n" bits de ce burst, ainsi que le montre l'exemple de représentation graphique de la figure 2. En raison du bruitage présent, il n'est pas possible d'exploiter directement les résultats obtenus comme on le déduit clairement de cette figure 2. Dans le type d'application envisagé, la position et l'amplitude des sauts de composante continue par rapport aux bursts qu'ils dégradent ne varient que très lentement par rapport au rythme de trame d'émission de ces éléments de signal.

De ce fait, il est prévu d'exploiter une valeur cumulée de composante continue pour les segments ayant même rang dans une suite de bursts successivement reçus pour un même signal. Ceci implique une mémorisation des valeurs de composante continue "dci" obtenues pour chacun des segments déterminés pour une suite d'un nombre donné de bursts de ce signal. La valeur obtenue par cumul pour chaque segment de rang "k" parmi les m/n segments déterminés par burst est ici traduite sous la forme (1):

$$\text{tds\_dci}(k) = A*\text{tds\_dci'}(k)+B*\text{dci\_inst}(k)$$

où la plus récente estimation "tds_dci" pour un segment donné est obtenue à partir de l'estimation cumulée précédemment déterminée pour le même segment et de la valeur instantanée "dci_inst" dernièrement obtenue pour ce segment.

"A" est un facteur d'oubli A et B un facteur de prise en compte de mesure. Ces facteurs A et B sont choisis de manière que leur somme soit égale à 1, avec par exemple A= 0, 9 et B= 0,1.

Ceci permet d'établir un tableau T des valeurs de composante continue pour l'ensemble des "m/n" segments de bursts où il y a stabilisation de la valeur de composante continue "dci" obtenue par cumul pour chaque segment.

Deux exemples de telles stabilisations sont montrés sur les figures 3 et 4 où sont graphiquement présentés des résultats respectivement obtenus après prise en compte d'un nombre "z1" de dix puis d'un nombre "z2" de cinquante bursts successifs d'un signal parasité par un brouilleur bursté. Il y apparaît la position du saut de composante continue créé par le brouilleur et ce avec une précision qui croît avec le nombre de bursts du signal reçu pris en compte.

Une estimation de la position "pos" du saut de composante continue est réalisée à partir du tableau T défini ci-dessus par estimation de l'erreur aux moindres carrés entre l'estimation du saut obtenue pour un segment par la formule (1) relative à la valeur "tds_dci" et celles obtenues pour les m/n positions possibles de saut dans un burst. A cet effet il est effectué deux évaluations à partir des valeurs suivantes:

$$dcb = \frac{\sum_{i=1}^{pos-1} tds\_dci(i)}{pos-1} \qquad dch = \frac{\sum_{i=pos}^{m/n} tds\_dci(i)}{(m/n)-pos}$$

La valeur "dcb" correspond à la valeur de composante continue constatée dans un burst avant l'apparition d'une transition occasionnée par un saut de composante continue dans ce burst.

La valeur "dch" ce qui correspond à la valeur de composante continue constatée dans un burst après l'apparition de la transition dans ce burst. L'erreur aux moindres carrés est obtenue par application de la formule:

$$Er = \sum_{i=1}^{pos-1}(tds\_dci(i)-dcb)^2 + \sum_{i=pos}^{m/n}(tds\_dci(i)-dch)^2$$

La valeur de position "pos" retenue pour chaque burst est celle pour laquelle l'erreur est minimale, c'est-à-dire celle qui est la plus proche de la valeur cumulée "tds_dci".

Les diagrammes des figures 5 et 6 montrent des résultats respectivement obtenus pour des estimations de position à partir de l'initialisation de l'algorithme de traitement pour respectivement les dix et cinquante bursts successifs de signal déjà pris en compte pour les opérations dont les résultats sont présentés sur les figures 3 et 4.

Une estimation de la position exacte du saut de composante continue à une position de bit près est alors réalisée pour le segment de "n" bits sélectionné. Cette estimation est effectuée à partir des valeurs "dcb", "dch" et d'une valeur intermédiaire "dci_int" correspondant au saut de composante continue pour les "n" bits du segment choisi, cette valeur intermédiaire étant donnée par la formule:

$$dci\_int = \Delta\_pos * dcb + (n-\Delta\_pos) * dch$$

ou "$\Delta\_pos$" correspond à la différence entre position fine et grossière pour l'une des "n" positions de bit du segment, c'est-à-dire

$$\Delta\_pos = (dc\_int-dch) / (dcb-dch)$$

La connaissance du facteur "pos" permet de définir la position dans un burst, courant à partir de laquelle doit intervenir la correction et celle des facteurs "dcb" et "dch" permet d'établir par simple différence la valeur de la correction à effectuer sur la composante prise en compte dans les opérations évoquées ci-dessus. Celle-ci a été supposée être celle en phase I du signal dans la description qui précède.

Dans une première variante de l'invention, la correction à effectuer pour l'autre composante du signal reçu, soit ici la composante en quadrature Q, est réalisée de la manière qui a été évoquée ci-dessus pour la composante en phase I.

Dans une seconde variante, plus économique, la correction à effectuer pour une des composantes en quadrature Q, ou éventuellement en phase I, peut prendre en compte la position "pos" déjà déterminée pour l'autre composante. Dans le cas considéré précédemment où la position "pos" a été déterminée pour la composante en phase I, il est prévu d'effectuer un calcul des valeurs "dcqb" et "dcqh" relative à la composante en quadrature Q de la même manière que pour les valeurs correspondantes "dcb" et "dcb" relatives à la composante en phase I et en conséquence selon les formules.

$$dcqb = \frac{\sum_{i=1}^{pos-1} tds\_dci(q)}{pos-1} \qquad dcqh = \frac{\sum_{i=pos}^{m/n} tds\_dci(q)}{(m/n)-pos}$$

Une estimation des deux valeurs conduisant à la correction à appliquer est obtenue par moyennage des valeurs de saut de composante continue sur plusieurs bursts successifs du signal reçu.

Ces deux valeurs moyennes dcqb_mem (burst p) et dcqh_mem (burst p) sont similairement calculées comme indiquée ci-dessous pour un burst "p" en fonction de la valeur prise en compte pour le burst reçu immédiatement précédent et de la valeur instantanée obtenue pour le burst courant.
On a ici:

$$dcqb\_mem \ (burst \ p) = A * dcqb\_mem \ (burst \ p\text{-}1) + B * dcqb\_inst$$

ainsi que:

$$dcqh\_mem \ (burst \ p) = A * dcqh\_mem(burst \ p\text{-}1) + B * dcqh\_inst.$$

Les facteurs d'oubli A et de prise en compte de mesure B sont ici supposés identiques à ceux déjà définis plus haut. La valeur fixée pour le facteur d'oubli permet d'agir sur la vitesse de convergence de l'algorithme mis en oeuvre ainsi que sur sa stabilité et donc sur le lissage qu'il effectue sur les résultats de mesure.

La connaissance des valeurs dcqb_mem (burst p) et dcqh_mem (burst p) permettent de déterminer par différence la correction à apporter aux bursts de signal ou plus précisément à la composante en quadrature Q du signal reçu à partir de la position "pos" définie comme indiqué plus haut.

La valeur fixée pour le facteur d'oubli permet d'agir sur la vitesse de convergence de l'algorithme mis en oeuvre ainsi que sur sa stabilité et donc sur le lissage qu'il effectue sur les résultats de mesure. Le taux d'erreur "BER" devient pratiquement nul de manière très rapide, et passe par exemple de 50% à 1% après réception d'une vingtaine de bursts successifs.

Il est aussi prévu de réaliser une seconde normalisation burst par burst des composantes en phase et en quadrature du signal reçu après correction de ces composantes de la manière indiquée ci-dessus.

Ceci permet d'améliorer la qualité de démodulation du signal reçu par un récepteur en particulier dans le cas où est présent un saut de composante continue de grande amplitude par rapport au signal utile reçu. La commande de contrôle automatique de gain du récepteur est agencée de manière à exploiter les résultats de la détermination d'énergie utile du signal reçu effectuée comme indiqué ci-dessus.

## Revendications

1. Dispositif de suppression des sauts parasites de composante continue affectant la réception d'un signal à fréquence radio émis temporellement multiplexé sous forme d'une succession d'éléments de signaux, dits "bursts", constitués chacun d'un même nombre "m" d'échantillons, caractérisé en ce qu'il comporte des moyens (10) de normalisation en puissance des bursts successivement reçus par rapport à la puissance du signal utile obtenu, des moyens (8) pour déterminer la valeur instantanée de la composante continue pour des segments de burst comportant un même nombre entier de m/n échantillons du même burst et des valeurs moyennes par segment qui sont obtenues par cumul à partir de bursts successifs, ainsi que pour déterminer des caractéristiques de valeur et de position du saut de composante continue pour chaque burst reçu, par calcul à partir des valeurs moyennes et instantanées par segments, chaque saut étant supposé au moins approximativement positionné dans le temps par rapport au burst qu'il dégrade comme le sera le saut suivant par rapport au burst suivant, des moyens correcteurs (9) pour soustraire les caractéristiques de saut déterminées pour chaque burst du signal en bande de base obtenu après normalisation.

2. Dispositif, selon la revendication 1, caractérisé en ce qu'il comporte des moyens (8) pour déterminer la valeur instantanée de composante continue pour les composantes en phase I et en quadrature Q à zéro fréquence d'un signal radio reçu et des moyens pour déterminer une valeur cumulée moyenne par segment de composante, d'une part en phase d'autre part en quadrature pour un burst reçu, par sommation de la valeur instantanée obtenue pour ce segment, pondérée par un facteur de prise en compte de mesure, et de la valeur cumulée obtenue pour le burst précédemment reçu pour le même signal, pondérée par un facteur d'oubli dont la somme avec le facteur de prise en compte de mesure est égale à un.

3. Dispositif selon la revendication 2, caractérisé en ce qu'il comporte des moyens (8) pour déterminer des caractéristiques de valeurs de composante continue pour chaque burst reçu, par calcul à partir des valeurs moyennes et instantanées par segments de burst qui comportent des moyens pour déterminer une valeur de composante continue, "dcb" ou "dcqb", avant l'apparition d'une transition occasionnée par un saut de composante continue dans un burst, et une valeur de composante continue, "dch" ou "dcqh", après apparition de la transition dans le même burst, tels que

$$dcb = \frac{\sum\limits_{i=1}^{pos-1} tds\_dci(i)}{pos-1} \qquad\qquad dch = \frac{\sum\limits_{i=pos}^{m/n} tds\_dci(i)}{(m/n)-pos}$$

pour la composante en phase I du signal reçu et

$$dcqb = \frac{\sum\limits_{i=1}^{pos-1} tds\_dci(q)}{pos-1} \qquad\qquad dcqh = \frac{\sum\limits_{i=pos}^{m/n} tds\_dci(q)}{(m/n)-pos}$$

pour la composante en quadrature de phase Q de ce signal reçu.

4. Dispositif selon la revendication 3, caractérisé en ce qu'il comporte des moyens (8) pour déterminer une position du saut de composante continue pour chaque burst reçu par prise en compte de l'erreur minimale déterminée pour un segment de ce burst au niveau d'une des composantes en phase et en quadrature, à partir d'une estimation de l'erreur aux moindres carrés pour chaque segment du burst pour la composante en phase ou en quadrature choisie.

5. Dispositif selon la revendication 4, caractérisé en ce qu'il comporte des moyens (8) pour déterminer une position de saut de composante continue précise à un bit près pour chaque burst reçu à partir des valeurs de composante continue avant et après une transition occasionnée par un saut de composante continue, dans une des composantes en phase ou en quadrature d'un burst, qui ont été déterminées pour le segment auquel correspond l'erreur minimale pour ce burst et d'une valeur intermédiaire correspondant au saut de composante continue déterminé pour les "n" bits du segment à erreur minimal.

6. Dispositif selon la revendication 5, caractérisé en ce qu'il comporte des moyens pour moyens correcteurs (9) prenant en compte la différence entre les valeurs de composante continue "dch" et "dcb" d'une part et "dcqh" et "dcqb" d'autre part qui sont déterminées pour un burst pour la suppression des composantes continues de saut parasite qui affectent les composantes en phase et en quadrature de ce burst, à partir de la position de saut, au bit près, déterminée pour ce burst.

7. Récepteur radio, de type fréquence intermédiaire zéro, fournissant deux composantes en bande de base, l'une en phase I et l'autre en quadrature Q, à partir d'un signal à fréquence radio reçu et plus particulièrement destiné à recevoir un signal émis temporellement multiplexé sous forme d'une succession d'éléments de signaux, dits "bursts", constitués chacun d'un même nombre "m" d'échantillons, caractérisé en ce qu'il comporte un dispositif de suppression des sauts parasites de composante continue (1), selon au moins l'une des revendications 1 à 6, contenu au moins en partie dans ou en amont d'un processeur de traitement numérique de signal (5) et en aval d'un étage convertisseur radio (2) fournissant les composantes en phase I et en quadrature Q d'un signal en bande de base à partir d'un signal à fréquence radio reçu par le récepteur.

8. Procédé de suppression des sauts parasites de composante continue affectant la réception d'un signal à fréquence radio émis temporellement multiplexé sous forme d'une succession d'éléments de signaux, dits "bursts", constitués chacun d'un même nombre "m" d'échantillons, caractérisé en ce qu'il comporte:

- au moins une étape de normalisation en puissance des bursts successivement reçus par rapport à la puissance du signal utile obtenu,
  une étape de détermination de la valeur instantanée de la composante continue pour des segments de burst comportant un même nombre entier de m/n échantillons du même burst et des valeurs moyennes par segment qui sont obtenues par cumul à partir de bursts successifs,
- une étape de détermination des caractéristiques de valeur et de position du saut de composante continue pour chaque burst reçu, par calcul à partir des valeurs moyennes et instantanées par segments, chaque saut étant supposé au moins approximativement positionné dans le temps par rapport au burst qu'il dégrade, comme le sera le saut suivant par rapport au burst suivant,

- une étape de correction de signal par soustraction des caractéristiques de saut déterminées pour chaque burst du signal en bande de base obtenu après normalisation.

# FIG.1

# FIG.2

# FIG.3

# FIG.4

# FIG.5

# FIG.6

Office européen
des brevets

**RAPPORT DE RECHERCHE EUROPEENNE**

Numéro de la demande

EP 98 40 0582

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 267 629 A (FUJITSU) 8 décembre 1993<br>* abrégé; figures 3,8,10,11 *<br>* page 1, ligne 10 - ligne 12 *<br>* page 1, ligne 19 - ligne 25 *<br>* page 2, ligne 15 - ligne 23 *<br>* page 2, ligne 27 - ligne 33 *<br>--- | 1,7,8 | H04L25/06 |
| A | US 4 318 128 A (SAUVANET) 2 mars 1982<br>* abrégé; figure 1 *<br>* colonne 3, ligne 44 - ligne 52 *<br>----- | 1,7,8 | |
| | | | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 30 juin 1998 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)